# EUROPEAN PATENT SPECIFICATION

(11) **EP 3 894 241 B1**
(45) Date of publication and mention of the grant of the patent: **04.06.2025**
(21) Application number: 19845717.8
(22) Date of filing: 09.12.2019
(51) Int. Cl.: B60C 23/04, B29D 30/00

(54) **TYRE WITH MONITORING DEVICE**
REIFEN MIT ÜBERWACHUNGSVORRICHTUNG
PNEUMATIQUE DOTÉ D'UN DISPOSITIF DE SURVEILLANCE

(30) Priority: 10.12.2018 IT 201800010943
(43) Date of publication of application: 20.10.2021
(73) Proprietor: Pirelli Tyre S.p.A., 20126 Milano (IT)
(72) Inventor: PUPPI, Cristiano, 20126 Milano (IT); BOSCAINO, Ivan Gildo, 20126 Milano (IT); NATTA, Andrea, 20126 Milano (IT); GIANNINI, Luca, 20126 Milano (IT); DE CANCELLIS, Pier Luigi, 20126 Milano (IT)
(74) Representative: PGA S.p.A.
(86) International application number: PCT/IB2019/060551
(87) International publication number: WO 2020/121151

(56) References cited:
- EP-A2- 2 301 770
- WO-A1-2016/042580
- DE-A1- 102011 003 707
- FR-A1- 3 052 708
- 3M: "3M(TM) Acrylic Plus Tape Series PT1000 Technical Data Sheet", 12 April 2018 (2018-04-12), XP055588358, Retrieved from the Internet <URL:http://multimedia.3m.com/mws/media/999176O/3m-automotive-acrylic-plus-tape-pt1500-datsheet.pdf> [retrieved on 20190514]

## Description

### FIELD OF THE INVENTION

The present invention relates to a tyre provided with a monitoring device, for example a device comprising a pressure sensor and/or a temperature and/or acceleration and/or deformation sensor, on the inner surface of the tyre.

### PRIOR ART

To improve the safety of motor vehicle traffic, the need to monitor the condition of a tyre during use on a motor vehicle, determining characteristic parameters of the tyre that represent its operating status, both in static conditions and in particular, while the vehicle is running, has long been felt.

A parameter of the tyre that can be monitored is the inflation pressure. A tyre that is not properly inflated can result in higher fuel consumption, impair vehicle manoeuvrability and cause uneven tyre wear, just to name a few of the most important problems. Systems have therefore been developed to monitor the inflation pressure of the tyres during use, these systems informing the driver of any drop in pressure and the consequent need to restore optimal conditions to avoid the aforementioned problems.

Another parameter that can provide very important information on the condition of the tyre during use is the tyre temperature. An abnormal increase in temperature is a sign of the presence of critical operating conditions, which could create irreversible damage to the tyre. Furthermore, since the pressure is influenced by the temperature, the measurement of the temperature allows recalculating the instantaneous measurement of the pressure in order to monitor the renormalized value thereof at room temperature.

International patent application WO2004110794A1 describes a tyre provided with a monitoring device adhering to the inner surface of the tyre. The monitoring device described was of the rigid type (i.e. made on rigid PCB - or Printed Circuit Boards), unlike the tyre, which instead has a dynamic behaviour, with continuous and cyclic deformations. The rigidity of the monitoring device resulted from the need to ensure that the welding joints to the board, the metal traces through the boards, and the integrated circuits themselves did not break due to bending.

The problem faced concerned the creation of a safe and stable connection between the tyre and the rigid monitoring device, since the radial mechanical stresses deriving from the rotation of the tyre during use caused the detachment of the rigid device. The proposed solution consisted of inserting at least one layer of a shock-absorbing material having a Shore A hardness (measured at 23°C according to the ASTM D2240 standard) between the inner surface of the tyre and the monitoring device, from about 1 to about 40, and an elastic return (measured at 23°C according to the ASTM D1054 standard) less than about 60.

DE 10 2011 003707 discloses a monitoring device (3), comprising electronic elements (31,32,33) embedded in a gel (8) enclosed by a film (4) and a sealing layer (5), so forming an assembly adhered to a tyre by an adhesive layer (10). The problem faced concerned both (a) the provision of a safe and stable connection between the tyre and the monitoring device and (b) the avoidance of a rigid housing for the sensor unit. The proposed solution was to embed the electronic elements (31,32,33) in a gel (8) to solve problem (b) together with enclosing the gel (8) within a film (4) and a sealing layer (5) and to adhere the film (4) to the inner surface of the tyre by an adhesive layer (10) to solve problem (a).

In recent years, electronic application technologies have emerged based on flexible and/or extensible supports, for example made with organic and inorganic semiconductors and/or flexible plastic materials.

Monitoring devices have been proposed made on flexible or even extensible supports for mounting inside the tyre or on the rim as described, for example, in US4862486A, US2007013503A1, US2010271191A1, US2014118134A1 and US2015097662A1.

WO2106/042580 discloses a monitoring device on flexible support bonded to the inner surface of a tyre by means of a double-sided adhesive tape comprising an acrylic foam layer with a layer of acrylic adhesive coated on both its sides, such as for example a 3M PT1500 tape.

### SUMMARY OF THE INVENTION

The Applicant perceived that the construction of monitoring devices on flexible supports to be applied to the inner surface of a tyre could be particularly advantageous for various reasons. First of all, these supports are typically very light: this allows decreasing the mass of the monitoring device compared to an equivalent one made on a rigid PCB, with advantages in terms of less imbalance caused to the tyre during rotation, less influence of the stresses transmitted to the device itself in the radial direction, possibility of fixing the device itself to the inner surface of the tyre by means of simple pressure sensitive adhesives (PSA). Furthermore, the flexibility of these devices should have allowed the devices themselves to adapt naturally to the deformations undergone by the tyre itself during rotation, unlike devices made on rigid PCBs.

However, the Applicant verified that this concept was too simplistic.

In particular, the Applicant has performed a long series of tests with tyres comprising monitoring devices made on flexible supports, extensible or not, fixed on the inner surface of the tyre, verifying that these devices exhibit various problems of resistance and/or durability over time in the different conditions of use of the tyre.

For example, the Applicant has verified that the monitoring devices made on flexible and extensible supports may undergo damage, such as breakage of the connection circuits between the components of the device itself.

From fatigue resistance tests carried out on tyres, the Applicant also verified that the devices made on flexible supports had different problems depending on whether or not such were also extensible.

In particular, the Applicant observed that devices made on flexible but not extensible supports (for example polyimide and polyethylene naphthalate) maintained the conductivity of the connection circuits between the different components of the device, but showed bad adhesion, with numerous and evident points of detachment from the inner surface of the tyre; on the other hand, devices made on flexible and also extensible supports (for example in polyurethane) showed good adhesion, but interruptions in conductivity due to breakages and/or interruptions in the conductive tracks of the electronic circuit.

Furthermore, the Applicant verified that even the use of extensible inks for the construction of the conductive tracks on the flexible and extensible supports could not solve the problem of their breakage and/or interruption, which also occurred in tests on high-speed tyres.

By analysing the results obtained from the long series of experimental tests, the Applicant has formulated some hypotheses regarding the problems observed.

Without wishing to be bound to any interpretative theory, the Applicant believes that the millions of cycles to which a monitoring device made on a flexible support, extensible or not, fixed on the inner surface of the tyre is subjected during the rotation of the tyre in its different conditions of use (speed, load, etc.) produce forces of different nature and intensity on the device itself.

In particular, the Applicant has observed that during the passage in the contact area the device undergoes cyclical composite forces in the longitudinal (and also lateral) direction, due to the deformation that the tyre undergoes during the rotation in contact with the road.

For example, the device undergoes stretching/extension and compression/shortening cycles when entering and leaving the footprint area, due to deformations of the inner surface of the tyre.

The components of the monitoring device may also contribute to the aforementioned composite cyclical stresses suffered by the device itself, due to the inertial effects caused by the masses of these components when subjected to the speed variations in the longitudinal (and also lateral) direction that occur when the monitoring device enters and leaves the footprint area.

The Applicant believes that the problems observed in the tests described above are largely attributable to the repeated shear stresses deriving from the composite cyclical forces generated in the longitudinal and lateral direction. However, these stresses were not particularly harmful for the monitoring devices made on rigid PCBs, for which it was believed that the much higher stresses in the radial direction were more influencing.

The Applicant therefore hypothesised that it was appropriate to reduce the transmission of longitudinal and lateral shear stresses, in particular in the connection between the tyre and the device, which could be the cause of the detachments and/or breakages of the conductive tracks.

For example, the Applicant found that the use of an acrylic double-sided adhesive tape comprising a viscoelastic acrylic foam resistant to dynamic shear stresses was able to ensure a good adhesion of the monitoring device on non-extensible flexible supports to the inner surface of the tyre.

By further experimentation, the Applicant further observed that the best results were obtained by using a small but non-negligible thickness of double-sided adhesive tape, for example between 0.4 and 2.4 mm.

Subsequently, the Applicant further observed that good adhesion results to the inner surface of the tyre of the monitoring device made on non-extensible flexible supports were obtainable with thick and soft adhesives, and/or with expanded polymeric material (or even in the form of gel), such as EPDM rubber or polyurethane, suitably made double-sided by means of layers of acrylic adhesive spread on their surfaces.

Therefore, a first aspect of the present invention relates to a tyre as defined in claim 1.

The decoupling element is able to withstand, in particular, the dynamic composite shear stresses which are generated (in different directions) due to the cyclic deformation that the tyre undergoes at the footprint. In practice, it appears to act as a substrate which withstands these shear stresses so as to deform (e.g. stretch and/or shorten) cyclically without breaking, so as to reduce or cancel the stresses transmitted to the flexible support and generated by the deformations of the inner surface, and/or withstand the stresses transmitted by the flexible support and generated by the inertial effects due to the masses of the components of the monitoring device. This has advantageously allowed using also non-extensible supports, more suitable for the purpose of adequately protecting the integrity of the conductive electrical connection tracks of the various components of the monitoring device. Furthermore, this allowed obtaining excellent adhesion conditions of the monitoring device to the inner surface of the tyre, without significant detachments.

Said decoupling element is an acrylic double-sided adhesive tape and may comprise (i) a viscoelastic acrylic foam or (ii) a substrate of expanded polymeric material (or even in the form of a gel), such as EPDM rubber or polyurethane or (iii) at least one acrylic adhesive layer with a thickness equal to or greater than 0.4 mm, or (iv) combinations thereof, said acrylic double-sided adhesive tape being resistant to a dynamic shear stress (for example measured according to ASTM D-1002) greater than 50 kPa, preferably greater of 150 kPa, for example between 50 and 3000 kPa.

According to another aspect, the present invention relates to a method for installing a monitoring device made on a flexible support (preferably non-extensible) on a tyre having an inner surface of substantially toroidal shape, the method being defined in claim 14.

### DETAILED DESCRIPTION OF THE INVENTION

In the present description and in the following claims, the expression "monitoring device" indicates any electrical, electronic or piezoelectric device capable of measuring and/or processing and/or storing and/or transmitting externally (for example to a fixed unit present on the vehicle, or a mobile device such as a smartphone, or a unit positioned in a point by which said vehicle passes) at least one characteristic parameter of the tyre, in digital or analogue form.

The characteristic parameter may be an instantaneous value or a value averaged over time, and may relate to:
- operating conditions of the tyre, for example the internal inflation pressure and/or the internal temperature of the tyre or of any of its parts (see for example US 5 540 092, US 5 900 808 and US 5 562 787); and/or
- data relating to a dynamic behaviour of the tyre, for example the acceleration or displacement of any point of the tyre in at least one direction selected from centripetal, longitudinal and lateral direction (see for example patents EP 887 211, WO 01/36241 and US 6 204 758); and/or
- data relating to interaction forces between the bead and the rim; and/or
- tyre identification data, for example manufacturing or uniformity data (see for example patent US 6 217 683).

Therefore the monitoring device may comprise an electronic unit comprising at least one sensor for measuring at least one characteristic parameter of the tyre (for example a pressure sensor, a temperature sensor, an accelerometer, a motion sensor, a deformation sensor or a speed sensor), and/or an electronic memory that contains tyre identification data (for example a chip or a transponder), and at least one transmitter for sending the measured data to an external unit.

The monitoring device may further comprise at least one power supply device. The term "power supply device" means a component structured to supply electricity to the electronic unit, which may comprise one or more accumulators, where the energy to be supplied is pre-accumulated (e.g. batteries or capacitors), and/or may comprise an in situ electricity generator and/or receiver suitable for directly powering the electronic unit and/or recharging the accumulators (such as an energy recovery device, or energy scavenging or harvesting, or an electromagnetic induction charger).

Preferably, the power supply device may comprise one or more electrical energy accumulators, more preferably comprises from two to four electrical energy accumulators, and even more preferably comprises two electrical energy accumulators.

The electronic unit and the power supply device are fixed on the flexible support of the monitoring device and are electrically connected through an electrical connection circuit.

Preferably, the electrical connection circuit is fixed on the flexible support, more preferably printed on said flexible support with a conductive ink, even more preferably printed by screen printing, lithographic, ink-jet technology, etc. In one embodiment, the electrical connection circuit comprises copper conducting tracks, preferably obtained by chemical etching of a thin layer (e.g. a few tens of microns) of copper. These technologies are particularly suitable for flexible substrates and capable of creating flex-resistant conductive tracks.

The flexible support may be made with an elastomeric or thermoplastic material, resistant to the operating temperatures expected for the tyre, typically included within a wide range which may go from about -40°C for winter use, up to about 150-160°C for sports use. More particularly, it is preferable to use materials without first and/or second order phase transitions (e.g. melting, glass transition) in the temperature range expected for the desired use.

For the purposes of the present description and of the following claims, "flexible support" generally means a support made of a material (including a layered/composite material) which, if used for the construction of a square-shaped sheet having a side significantly greater than the circumferential extension of the area of entry or exit from the footprint area of a tyre (for example a slab with a surface area of 120 mm x 120 mm) and with a thickness equal to the support, allows such a sheet to conform - at room temperature - to a cylindrical surface with a radius smaller than the normal radius of curvature of a tyre inflated to its nominal pressure (for example a cylindrical surface with a radius of 200 mm, preferably 100 mm, more preferably 50) without breaking or undergoing permanent deformation.

For the purposes of the present description and of the following claims, "non-extensible support" generally means a support with a thickness of between about 10 µm and about 400 µm, preferably between about 50 µm and about 200 µm, made with a material (including a layered/composite material) having elasticity tensile modulus preferably higher than 0.1 GPa, more preferably higher than 0.5 GPa at 23°C.

Preferably, said flexible support is a film of an elastomeric or thermoplastic material selected from nylon, PET, PEN, polyimide, and polyurethane material. Silicon (or other semiconductor) foils may also be used. Such flexible supports have proven to be suitable for technologies in which the electrical connection tracks are moulded or deposited on the support or chemically etched, the pre-fabricated electronic components are fixed by gluing, and the connection between the components and the electrical connection tracks may be made using conductive adhesives and/or soldering with tin or alloys thereof (for example tin-bismuth).

Advantageously, the flexible support is made of materials based on polyimide, polyetherimide, fluoropolymers or polyester, in particular semi-aromatic polyesters such as polyethylene terephthalate, polybutylene terephthalate, polytrimethylene terephthalate and polyethylene naphthalate. Polyimide supports are commercially available, for example, from Dupont under the Kapton^{™} brand. Polyester supports are commercially available from Teijin under the Teonex^{™} brand.

The flexible support may be made in a variety of not particularly limited shapes. The flexible support may have, for example, a square, rectangular, rhomboid, circular shape, or a combination thereof to form particular shapes such as a Z or M shape.

The edges of the flexible support may be at right angles, or, preferably, they may be chamfered, cut or rounded.

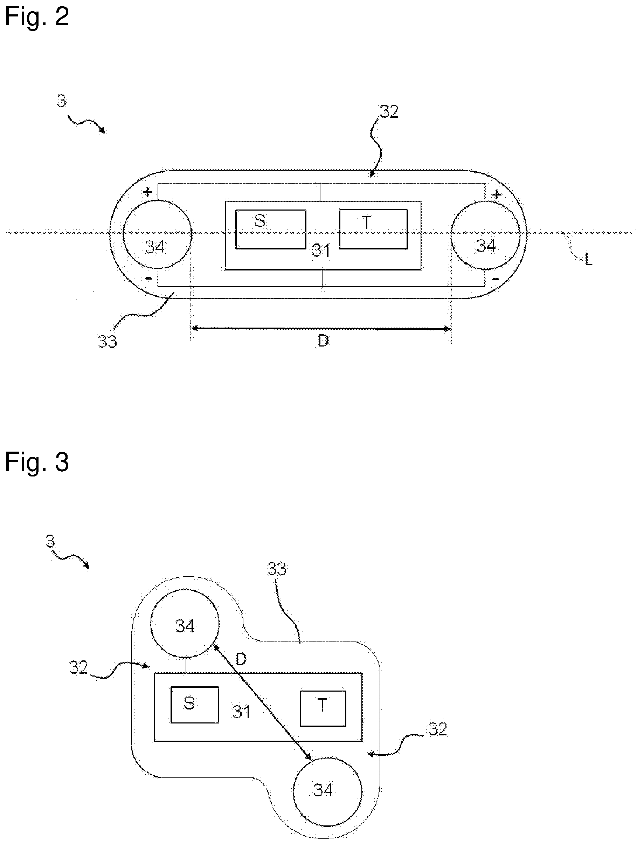

Preferably, the flexible support has an elongated rectangular or cigar shape, i.e. rectangular with rounded edges, as shown in Figure 2.

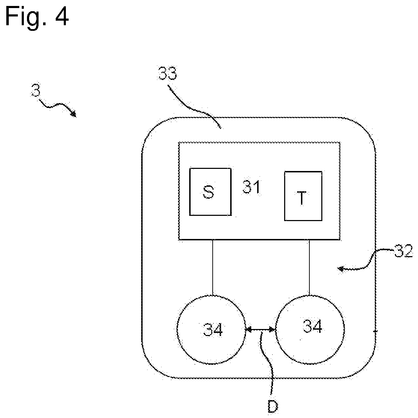

Alternatively, the flexible support has a Z shape as shown in Figure 3, or a square shape as shown in Figure 4.

The dimensions of the flexible support are not particularly limited, and depend on the dimensions of the electronic unit and the power supply device.

Typically, the dimensions of the flexible support exhibit a length of between 20 and 150 mm, preferably between 40 and 120 mm, and a width of between 10 and 90 mm, preferably between 20 and 50 mm. The length of the flexible support is advantageously 30, 35, 40, 45, 50, 55, 60, 65, 70, 75, 80, 85, 90, 95, 100, 105 or 110 mm. The width of the flexible support is advantageously 10, 15, 20, 25, 30, 35, 40, 45, 50, 55, 60, 65, 70, 75, 80, 85 or 90 mm.

According to the present invention, a decoupling element is interposed between the monitoring device and the inner surface of the tyre.

The decoupling element is an acrylic double-sided adhesive tape.

This acrylic double-sided adhesive tape withstands a dynamic shear stress measured according to ASTM D-1002) greater than 50 kPa, preferably greater than 150 kPa, for example between 50 and 3000 kPa.

In a first embodiment, the decoupling element may be an acrylic double-sided adhesive tape comprising a viscoelastic acrylic foam with a thickness equal to or greater than 0.4 mm.

Useful examples of decoupling element according to the present invention are represented by the 3M^{™} VHB^{™} adhesive tapes of the 4941 family, the 4956 family and the 5952 family, or by the 3M^{™} adhesive tapes of the RP45 family and the RP62 family, or by the Nitto Hyperjoint adhesive tapes of the H8004-H8008-H8012-H9004-H9008-H9012 family.

Such tapes consist of a conformable acrylic foam adhesive on both sides. In order to increase the adhesiveness, a PSA acrylic adhesive (for example, the 3M^{™} 9469, 3M^{™} 468, 3M^{™} 93430 or Nitto 5925 adhesives) may be further applied to one or both of the surfaces of the above tapes.

Alternatively, the decoupling element may be an acrylic double-sided adhesive tape comprising a substrate of expanded polymeric material (or even in the form of a gel) with a thickness equal to or greater than 0.4 mm, such as for example an expanded EPDM rubber or an expanded polyurethane, made double-sided by means of acrylic adhesive layers spread on both surfaces of the substrate.

EPDM foam rubber derives from a family of synthetic rubbers obtained by copolymerization of ethylene and propylene in the presence of an expanding agent, generally hydrocarbons, CO₂ or other mixtures.

Likewise, the expanded polyurethane derives from a family of polymers characterized by the presence of urethane bonds (-N-CO-O-) and obtained by reacting in the presence of an expanding agent di-, tri-, poly-isocyanates with a polyol, typically a polyether polyol, obtained by polymerization of an epoxide, or a polyester polyol, obtained by polycondensation of multifunctional carboxylic acids and polyhydroxyl compounds.

In both cases, a soft spongy material is obtained comprising at its interior closed or open cells characterized by a density of between 10 and 800 kg/m³, preferably between 20 and 700 kg/m³.

Non-limiting examples of foamed EPDM rubber useful for the purposes of the present invention available on the market are represented by layers of foamed EPDM rubber produced by the company Tekspan Automotive, such as for example a layer of EPDM SE30 rubber (for example made double-sided with PSA acrylic adhesives arranged on both surfaces of the layer).

Non-limiting examples of polyurethane foam useful for the purposes of the present invention available on the market are represented by layers of expanded polyurethane of the Cirene line produced by the company Cires SpA, such as for example the layers of expanded polyurethane Cirene 20, 25 and 30 (for example, made double-sided by means of PSA acrylic adhesives arranged on both surfaces of the layer), and by the 3M^{™} adhesive tapes of the "Double Coated Urethane Foam Tapes" family 4004-4008-4016-4026-4032-4052-4056-4085.

Further useful examples of decoupling element according to the present invention are represented by an acrylic double-sided adhesive tape comprising at least one layer of acrylic adhesive with a thickness equal to or greater than 0.4 mm such as, for example, the 3M^{™} adhesive tapes of the Extreme Sealing 4411 and 4412 family, made double-sided with a PSA acrylic adhesive (for example 3M^{™} 9469, 3M^{™} 468, 3M^{™} 93430 or Nitto 5925 adhesives).

The thickness of the decoupling element, including the adhesive layers deposited on its surfaces, is preferably between 0.4 and 2.4 mm, more preferably between 0.6 and 2.2 mm, even more preferably between 0.8 and 2,0 mm, and advantageously between 1.0 and 1.8 mm.

The other dimensions of the decoupling element, length and width, depend on the dimensions of the flexible support of the monitoring device. The length and width of the decoupling element are preferably at least equal to the length and width of the flexible support of the monitoring device. More preferably, the length and/or width of the decoupling element are greater than the length and/or the width, respectively, of the flexible support. Advantageously, the length and/or width of the decoupling element respectively exceeds the length and width of the flexible support by at least 0.5 mm, preferably by at least 2 mm, and more preferably by a range of between 3 and 5 mm.

There are no particular limitations to the features of any adhesive used for the decoupling element, provided that it is resistant to the operating temperatures expected for the tyre, typically included within a wide range which, as mentioned above, may go from about -40°C for winter use, up to about 150-160°C for sports use.

Preferably, a protective layer is added on the monitoring device to cover and protect the components of the device (electronic devices, conductive tracks, accumulators, etc.). The protective layer is not particularly limited: films of polymeric material, such as a covering layer of nylon (Nylon cast film Domo^{™} Filmon^{™} CSX18), laminated with an acrylic adhesive, may be used for this purpose.

The length and width of the protective layer depend on the size of the flexible support of the monitoring device. The length and width of the protective layer are preferably at least equal to the length and width of the flexible support. More preferably, the length and/or width of the protective layer are greater than the length and/or the width, respectively, of the flexible support. Advantageously, the length and/or width of the protective layer respectively exceeds the length and width of the flexible support by at least 0.5 mm, preferably by at least 2 mm, and more preferably by a range of between 3 and 5 mm.

The method according to the present invention may be applied to tyres of any type and may be advantageously implemented by the user when old tyres are replaced with new ones. This is possible because the operation of inserting the device into the tyre can be carried out simply and quickly and does not necessarily require execution by specialized personnel.

The portion of the inner surface on which the monitoring device is installed may be advantageously selected in an area where the bending stresses of the tyre are relatively low.

In particular, a portion at a crown area of the tyre, preferably in the proximity of the equatorial plane of the tyre, is preferred. Alternatively, the monitoring device may be installed on a portion of the inner surface at a bead area of the tyre.

Preferably, the installation of the monitoring device is carried out at a clean portion of the inner surface of the tyre, in the absence of adhesion promoters (or primers). The clean surface portion may be obtained, for example, by cleaning with detergents, and/or solvents, and/or by mechanical action, and/or by laser polishing action. In another embodiment, a protective film may be arranged on the green tyre upstream of the vulcanisation, at the inner surface portion intended for the installation of the monitoring device. The protective film keeps the inner surface portion of the tyre substantially free from pollution by detaching agents (or in any case from dirtying or undesired substances from the vulcanisation process), and is then removed downstream of the vulcanisation process, before installation of the monitoring device. Such a film may be made of a material resistant to the operating conditions of temperature and pressure typical of the vulcanisation process, such as for example nylon or polyester.

Further features and advantages will become apparent from the detailed description of preferred but non-limiting embodiments of the present invention.

This description is provided below with reference to the accompanying drawings, in which:
Figure 1 shows a cross section of a tyre mounted on its support rim, with a monitoring device mounted on the inner surface of the tyre according to the invention,
Figures 2-4 show a schematic plan view of respective embodiments of the monitoring device used in the present invention.

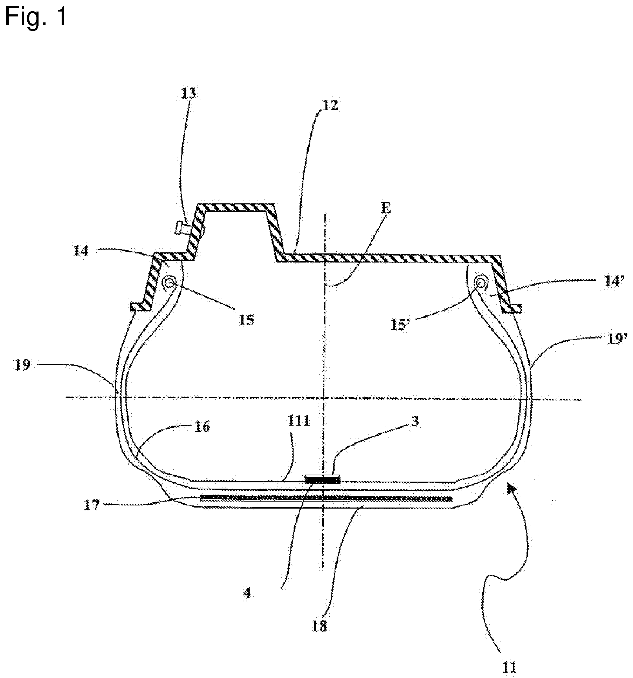

Figure 1 shows a wheel comprising a tyre 11, of the type normally known as "tubeless", in other words without an inner tube, and a support rim 12. This tyre is inflated by means of an inflation valve 13 positioned, for example, on the channel of said rim.

The tyre 11, of which figure 1 is a schematic representation, has an internally hollow toroidal structure formed by a plurality of components. A metal or textile carcass structure 16 has two beads 14 and 14', each formed along an inner circumferential edge of the carcass structure 16 for fixing the tyre 11 to the corresponding support rim 12 of the wheel. Each of the beads 14 and 14' comprising at least one annular reinforcement core 15 and 15', known as a bead core.

The carcass structure 16 is formed by at least one reinforcement ply which contains textile or metal cords which extend axially from one bead 14 to the other 14' in a toroidal profile, and which has each of its ends associated with a corresponding bead core 15 and 15'. In radial tyres, the aforementioned cords are located substantially on the planes containing the rotation axis of the tyre.

An annular structure 17, known as a belt structure, normally formed by at least one layer of metal or textile cords incorporated in an elastomeric material, is positioned on the crown area of the carcass structure 16. Normally the belt structure 17 comprises two belt strips (not shown in Figure 1) which incorporate a plurality of reinforcement cords, normally metal cords, which are parallel to each other in each strip and intersect with respect to the adjacent strip, oriented in a way such as to form a predetermined angle with respect to a circumferential direction. It is possible to optionally apply at least one further reinforcement layer (not shown in Figure 1) to the radially outermost belt strip, said additional layer by incorporating a plurality of reinforcement cords, normally textile cords, arranged at an angle of a few degrees with respect to a circumferential direction, covered and joined together by means of an elastomeric material.

In a radially outer position with respect to the belt structure 17, a tread band 18 is applied, formed by an elastomeric material and usually having a tread pattern on the radially outermost surface for the rolling contact of the tyre with the road.

Furthermore, two sidewalls 19 and 19' of elastomeric material, each extending radially outwards from the outer edge of the corresponding bead 14 and 14', are positioned on the carcass structure in axially opposite lateral positions.

In tyres of the type known as tubeless, the inner surface of the tyre is normally coated with a liner 111, that is, at least one layer of air-tight elastomeric material. Finally, the tyre may comprise other known elements, for example additional reinforcement elements, rubber fillers, etc., according to the specific model of the tyre.

The system for monitoring the tyre usually comprises, in general terms, a fixed unit, preferably positioned on the vehicle in which the tyre is mounted, and a mobile unit, i.e. the monitoring device 3 containing the sensor, associated with the surface of the liner 111 of the tyre 11, as shown in Figure 1, by means of the decoupling element 4.

As illustrated in Figures 2-4, the monitoring device 3 comprises at least one electronic unit 31 comprising a sensor S for measuring at least one characteristic parameter of the tyre (for example pressure, temperature, acceleration, deformation, etc.), a transmitter T for sending data to the fixed unit, and a power supply device comprising at least one accumulator 34, for supplying electrical energy to the electronic unit 31.

As an example, the sensor may be a model FXTH870911DT1 sensor marketed by NXP Semiconductors^{®}, suitable for detecting all three physical quantities: temperature, pressure and acceleration, in particular at least the radial component and the tangential component of the acceleration.

As an example, the transmitter T may be a Bluetooth transmitter model SmartBond DA1458 marketed by Dialog Semiconductor^{®}.

Figures 2-4 show two accumulators 34, but the monitoring device 3 may also comprise only one accumulator 34, or even more than two accumulators, such as for example three or four accumulators arranged symmetrically with respect to the electronic unit 31.

By way of example, the accumulators 34 may be represented by electric batteries, for example by button batteries of the CR2032HR type marketed by Maxell^{®} (capacity 200 mAh, weight 3g, diameter and thickness 20x3.2mm), or BR1632A marketed by Panasonic^{®} (capacity 120mAh, 1.5 g, 16x3.2mm). The typical voltage is equal to about 3V, and the operating temperature range is from -40°C to + 125°C.

The electronic unit 31 and the accumulators 34 are electrically connected through an electrical connection circuit 32 schematically shown in Figures 2-4.

In one embodiment, the tracks of the electrical connection circuit 32 are made with a conductive ink (e.g. DuPont^{®} 5025 silver conductive ink) printed with a screen printing technique directly on the flexible substrate 33.

The electronic unit 31 and the accumulator or accumulators 34 are arranged and glued on the flexible support 33, for example by means of conductive adhesive (e.g. Henkel 3104 WXL) and structural adhesive (e.g. Henkel A312).

In the embodiment shown in Figures 2 and 3, two accumulators 34 are arranged on opposite sides of the electronic unit 31.

For example, in the embodiment according to Figure 2 the dimensions along the longitudinal direction and along the orthogonal dimension (in the plane of Figure 2) may be equal to 110x30mm or 80x25mm. The distance D between the two accumulators 34 is equal to about 70 mm in the case of dimensions 110x30mm, while for dimensions equal to 80X25mm, the distance D is equal to about 50 mm.

In the embodiment shown in Figure 4, the monitoring device 3 has a plan (e.g. defined by the plan of the flexible support 33) with an elongated shape along a prevailing longitudinal development direction L, and two accumulators 34 are arranged at the longitudinally opposite ends of the monitoring device 3.

Preferably, the support 33 of the monitoring device 3 is made of a flexible but non-extensible material. For example, the support 33 is made of polyimide or polyester (in particular polyethylene naphthalate). Polyimide supports are commercially available, for example, from Dupont under the Kapton^{™} brand. Polyester supports are commercially available from Teijin under the Teonex^{™} brand.

According to the present invention, a decoupling element 4 is interposed between the monitoring device 3 and the inner surface of the tyre 111.

For example, the decoupling element 4 is represented by adhesive tapes 3M^{™} VHB^{™} of the 4941 family, the 4956 family and the 5952 family, or by the 3M^{™} adhesive tapes of the RP45 family and the RP62 family, or by the Nitto Hyperjoint adhesive tapes of the H8004-H8008-H8012-H9004-H9008-H9012 family.

In further examples, the decoupling element 4 is represented by a polyurethane foam substrate of the Cirene line produced by the company Cires SpA or by an EPDM foam rubber substrate SE30 produced by the Tekspan Automotive company, made double-sided by means of acrylic adhesive layers. (for example 3M^{™} 9469, 3M^{™} 468, 3M^{™} 93430 or Nitto 5925 adhesives) spread on both substrate surfaces, or a double-sided polyurethane foam substrate from the 3M^{™} line of adhesive tapes from the "Double Coated Urethane Foam Tapes" family 4004-4008-4016-4026-4032-4052-4056-4085. In further examples, the decoupling element 4 is represented by layers of thick acrylic adhesive such as the 3M^{™} 4411 and 4412 tapes, made double-sided by a PSA adhesive (for example, the 3M^{™} 9469, 3M^{™} 468, 3M^{™} 93430 or Nitto 5925 adhesives).

The thickness of the decoupling element, including the adhesive layers deposited on its surfaces, is preferably between 0.4 and 2.4 mm, more preferably between 0.6 and 2.2 mm, even more preferably between 0.8 and 2,0 mm, and advantageously between 1.0 and 1.8 mm.

The present invention will now be further illustrated by the following examples.

### Example 1 - Comparison

Test samples were made by creating a conductive track with ECM CI-1036 silver-based flexible conductive ink on rectangular substrates having dimensions 90x60 mm made with different flexible materials, both extensible and non-extensible. In particular, the following materials were used:

| | | |
|---|---|---|
| Substrate 1 | 3M^{™} 8616 polyurethane tape - 100 µm thickness - provided with acrylic adhesive | Flexible Extensible |
| Substrate 2 | Delstar^{™} EU94DS thermoplastic polyurethane film (TPU) - 80 µm thickness - without adhesive | Flexible Extensible |
| Substrate 3 | Cross-linked polybutylene rubber film - 100 µm thickness - without adhesive | Flexible Extensible |
| Substrate 4 | Kapton^{™} polyimide film - 76 µm thickness - without adhesive | Flexible Non-extensible |
| Substrate 5 | Kapton^{™} polyimide film - 127 µm thickness - without adhesive | Flexible Non-extensible |
| Substrate 6 | PET film - 127 µm thickness - without adhesive | Flexible Non-extensible |
| Substrate 7 | Teonex Q65HA PEN film - 127 µm thickness - without adhesive | Flexible Non-extensible |

To adhere substrates 2-7 to the inner surface of the tyre (liner), the 3M^{™} 93430 acrylic double-sided adhesive tape was used.

The tyres used were Pirelli P ZERO^{™} 265/35ZR22 (103W) SC.

A fatigue resistance test was carried out on tyres inflated to controlled pressure kept constant for the duration of the test, subjected to constant vertical load and subjected to rolling at constant speed.

The test was carried out on an Indoor machine with a 1.7 meter diameter drum with a camber angle equal to 0°.

At the end of the test, the tyres were removed and the adhesion and strength of the conductive track was checked (compared to the values recorded before the test). The results are summarised in the following Table 1.

**TABLE 1**

| Substrate | Resistance (Ω) | | Adhesion |
|---|---|---|---|
| | Before | After | |
| 1 | 3.0 | Infinite | No detachment |
| 2 | 7.5 | Infinite | No detachment |
| 3 | 3.0 | Infinite | No detachment |
| 4 | 2.6 | 70 | Large detachments with adhesive on the substrate |
| 5 | 2.3 | 6 | Large detachments with adhesive on the substrate |
| 6 | 3.0 | 17 | Large detachments with disappearance of the adhesive |
| 7 | 2.5 | 4.5 | Large detachments on the edges with disappearance of the adhesive or residues on the liner |

The test results showed that the use of substrates with flexible and extensible materials (substrates 1-3) allowed obtaining a good adhesion with acrylic adhesives (for example of the type 3M 93430), but the deformations suffered by these materials caused breakage of the conductive track, while on the contrary the use of only flexible materials (substrates 4-7) allowed preserving the conductive track, but to the expense of the adhesion which worsened visibly.

### Example 2 - Comparison

The test of example 1 was repeated, with the same materials but using a covering layer of nylon (Nylon cast film Domo^{™} Filmon^{™} CSX18) laminated with adhesive (3M^{™} 9502) protruding from the sample area.

The results are summarised in the following Table 2.

**TABLE 2**

| Substrate | Resistance (Ω) | | Adhesion |
|---|---|---|---|
| | Before | After | |
| 1 | 3.0 | Infinite | No detachment |
| 2 | 5.0 | Infinite | No detachment |
| 3 | 3.0 | Infinite | No detachment |
| 4 | 2.4 | 13 | Large detachments with adhesive on the substrate |
| 5 | 2.3 | 6 | Large detachments with adhesive on the substrate |
| 6 | 3.1 | 4.5 | Large detachments with disappearance of the adhesive |
| 7 | 2.5 | 2.5 | Large detachments on the edges with disappearance of the adhesive or residues on the liner |

The test results were therefore similar to those of example 1. The tested solution gave no improvement on the adhesion of the only flexible substrates (1-3) and on the integrity of the conductive track of the flexible and extensible substrates (4-7).

### Example 3 - Invention

From the fatigue resistance tests described above it emerged that the conductive tracks reported on flexible and extensible substrates tended to degrade progressively during the test, until reaching substantially infinite resistance values (i.e. until the interruption of the electrical continuity of the tracks themselves), due to the millions of footprint entry/exit cycles to which the tyre is subjected during the test. On the other hand, the conductive tracks reported on flexible and non-extensible substrates instead preserved optimal conductivity values, but the adhesion of the substrate to the tyre liner was not guaranteed, with significant detachments between substrate and adhesive, as well as between adhesive and liner, at the end of the fatigue test.

The Applicant has therefore carried out a further series of fatigue resistance tests using flexible and non-extensible substrates, with a decoupling element interposed. The samples used (60x30 mm in size) are shown in Table 3 below.

**TABLE 3**

| Sample | Substrate | Decoupling element |
|---|---|---|
| 1A | Kapton^{™} polyimide film | PU Cyrene 30 2.3mm |
| | Thickness 127 µm | 3M^{™} 93430 adhesive on both sides |
| | Without adhesive | |
| 2A | Kapton^{™} polyimide film | EPDM foam SE30 2.6mm |
| | Thickness 127 µm | 3M^{™} 93430 adhesive on both sides |
| | Without adhesive | |
| 3A | Kapton^{™} polyimide film | 3M^{™} 4956, 1.6mm |
| | Thickness 127 µm | 3M^{™} 93430 adhesive on both sides |
| | Without adhesive | |
| 4A | Kapton^{™} polyimide film | 3M^{™} VHB^{™} 4941, 1.1mm with two adhesive surfaces. |
| | Thickness 127 µm | |
| | Without adhesive | |
| | | 3M^{™} 93430 adhesive on the inner liner side. |
| 5A | Kapton^{™} polyimide film | 3M^{™} VHB^{™} 5962, 1.6mm with two adhesive surfaces. |
| | Thickness 127 µm | |
| | Without adhesive | |
| | | 3M^{™} 93430 adhesive on the inner liner side. |
| 6A | Kapton^{™} polyimide film | 3M^{™} RP45, 1mm, with two adhesive surfaces. |
| | Thickness 127 µm | |
| | Without adhesive | 3M^{™} 93430 adhesive on the inner liner side. |
| 7A | Kapton^{™} polyimide film | 3M^{™} RP62, 1.6mm with two adhesive surfaces. |
| | Thickness 127 µm | |
| | Without adhesive | 3M^{™} 93430 adhesive on the inner liner side |

The following table 4 shows the results of the fatigue resistance tests carried out in the same way as in examples 1 and 2.

**TABLE 4**

| Sample | Resistance (Ω) | | Adhesion |
|---|---|---|---|
| | Before | After | |
| 1A | 0.8 | 2.0 | No detachment |
| 2A | 0.8 | 1.0 | No detachment |
| 3A | 8.0 | 16.0 | Minimum detachment of 3 mm on one side |
| 4A | 6.2 | 12.3 | Minimum detachment of 3 mm on one side |
| 5A | 1.4 | 2.8 | No substantial detachment |
| 6A | 7.3 | 12.5 | No substantial detachment |
| 7A | 2.0 | 2.9 | Minimum detachment of 5 mm on one side |

The test results showed that the presence of the decoupling element allowed obtaining good adhesion without negatively affecting the integrity of the conductive tracks, which maintained sufficiently adequate resistance values even after the fatigue resistance test.

Sample 2A showed the best results with minimal increase in endurance and no detachment, followed by samples 1A and 5A. The other samples, however, obtained good results, which met the specific requirements both in terms of adhesion to the tyre and integrity of the conductive tracks.

### Example 4 - Invention

In view of the good results obtained with example 3, test samples (1-7 of table 5) were made with substrates having a cigar shape (Figure 2) having dimensions 110x30 mm made with Kapton^{™} polyimide film having thickness of 127 µm. Two Panasonic BR1632 batteries weighing approximately 1.8g and sized 16x3.2mm were glued to the ends of each sample using a covering layer of nylon (Nylon cast film Domo^{™} Filmon^{™} CSX18) laminated with adhesive (3M^{™} 9502).

Despite the poor resistance to the fatigue test, samples 1 and 7 without a decoupling layer were used as a comparison to verify their performance in the high speed test. Sample 2 was made without conductive tracks as the ability of this decoupling layer to maintain the integrity of the conductive tracks had already been demonstrated. On samples 3-6 a conductive track was also made with silver-based flexible conductive ink ECM CI-1036. On samples 1-2 and 7 only the adhesion capacity was assessed, as well as the possible presence of damage to the samples themselves or to the tyre.

To adhere the samples to the inner surface of the tyre (liner), different types of adhesive were used as per table 5 with or without a decoupling layer. The total weight of the samples is shown in table 5.

**TABLE 5**

| Sample | Weight (g) | Adhesive | Decoupling layer | Notes |
|---|---|---|---|---|
| 1 | 5 | Adhesive tape 3M^{™} 93430 | - | Sample without conductive strips |
| 2 | 7 | Adhesive tape 3M^{™} 93430 on both sides | Tekspan EPDM SE30 2mm | Sample without conductive strips |
| 3 | 8 | Adhesive tape 3M^{™} 93430 on the inner liner side | 3M^{™} VHB 5962 1.6mm | The adhesive tape has only an adhesive function |
| 4 | 7 | 3M^{™} VHB 5962 1.6mm | | The adhesive tape also performs a decoupling function |
| 5 | 7 | Adhesive tape 3M^{™} 93430 on the inner liner side | 3M^{™} VHB 4941 1.1mm | The adhesive tape has only an adhesive function |
| 6 | 8 | 3M^{™} VHB 5962 1.6mm | | The adhesive tape (with decoupling function) was about 3mm wider than the substrate |
| 7 | 5 | Adhesive tape 3M^{™} 93430 | - | Sample without conductive strips A covering layer of nylon was added as for example 2 |

The tyres used were Pirelli P ZERO^{™} 305/30 ZR20 (103Y).

A high speed test was carried out on inflated tyres stressed with constant vertical load, with increasing speeds and periodically increased in steps. The test was carried out on an Indoor machine with a 1.7 meter diameter drum with a camber angle equal to 0°.

At the end of the test, the tyres were removed and the adhesion and strength of the conductive track, where present, was checked. The results are summarised in the following Table 6.

**TABLE 6**

| Sample | Resistance (Ω) | | Adhesion |
|---|---|---|---|
| | Before | After | |
| 1 | - | - | No detachment. Almost perfect |
| 2 | - | - | Adhesive shrinkage: 1 mm |
| | | | Good adhesion, no detachment. |
| 3 | 0.07 | 1 | Good adhesion, no detachment. |
| | | | Slight shrinkage (not measurable) |
| 4 | 0.01 | 0.2 | Minimum detachment of 2 mm on one side only |
| | | | Slight shrinkage (not measurable) |
| 5 | 5 | 4 | 3 mm displacement towards the inner side of the tyre |
| | | | Minimum detachment of 3 mm on the rounded end |
| 6 | 2.2 | 1.6 | Perfect adhesion, slight ripple in the centre |
| 7 | - | - | Perfect adhesion, air bubble under the nylon film around the batteries |

The results of the high speed test carried out with the 3M^{™} VHB 5962 decoupling layer confirmed the good results of the fatigue resistance test, demonstrating good adhesion and at the same time maintaining the integrity of the conductive track.

Sample 2, with the decoupling layer made of Tekspan SE30 foamed EPDM rubber confirmed the good adhesion features even in the high speed test.

Samples 1 and 7 gave good adhesion features at high speed, but as shown in examples 1 and 2 they fail to guarantee a correct adhesion of the substrate in the fatigue resistance tests.

All the samples also preserved the integrity of the tyre, without the formation of blisters and/or other damage, in conjunction with the sensor.

### Example 5 - Invention

Further high-speed tests were conducted (in the same way as in example 4) also with conductive copper tracks obtained by chemical etching on a 127 µm thick Kapton^{™} polyimide film, adhered to the inner surface of the tyre with a VHB 5962 having 1.6 mm thickness interposed as a decoupling element (and adhesive). Also in this case, at the end of the tests, the integrity of the conductive tracks was observed, with a resistance value substantially equal to 0.5 Ω, together with maintaining the correct adhesion of the substrate.

## Claims

1. A tyre (11) having an inner surface (111) and at least one monitoring device (3) adhering to said inner surface (111), wherein such monitoring device (3) is made on a flexible support, the adhesion of said flexible support to said inner surface (111) being achieved through a decoupling element interposed between said at least one monitoring device (3) and said inner surface (111) of the tyre (11),
wherein said decoupling element is an acrylic double-sided adhesive tape, and
**characterised in that**
said acrylic double-sided adhesive tape is resistant to a dynamic shear stress higher than 50 kPa, measured according to ASTM D-1002.

2. Tyre (11) according to claim 1, wherein said acrylic double-sided adhesive tape comprises a component selected from the group consisting of (i) a viscoelastic acrylic foam, (ii) a substrate of expanded polymeric material, (iii) at least one acrylic adhesive layer, or (iv) combinations thereof, wherein said component (i), (ii) and (iii) has a thickness equal to or higher than 0.4 mm.

3. Tyre (11) according to claim 1, wherein said acrylic double-sided adhesive tape is resistant to the operating temperatures of the tyre (11) from about -40°C to about 160°C.

4. Tyre (11) according to claim 1, wherein said acrylic double-sided adhesive tape is resistant to a dynamic shear stress higher than 150 kPa, for example ranging from 150 to 3000 kPa.

5. Tyre (11) according to claim 2, wherein said expanded polymeric material is selected from the group consisting of expanded EPDM rubber, expanded polyurethane, and combinations thereof.

6. Tyre (11) according to claim 2, wherein said substrate of expanded polymeric material comprises an acrylic adhesive layer coated on both surfaces of said substrate.

7. Tyre (11) according to claim 2, wherein said expanded polymeric material has a density ranging from 10 to 800 kg/m³, preferably ranging from 20 to 700 kg/m³.

8. Tyre (11) according to any one of the preceding claims, wherein said decoupling element has a thickness, including the adhesive layers deposited on the surfaces thereof, ranging from 0.4 to 2.4 mm, preferably ranging from 0.6 to 2.2 mm, more preferably ranging from 0.8 to 2.0 mm.

9. Tyre (11) according to any one of the preceding claims, wherein the length and/or width of said decoupling element are equal to or greater than the length and/or width of said flexible support, respectively.

10. Tyre (11) according to any one of the preceding claims, wherein a protective layer is disposed on said monitoring device (3) to cover and protect the components of said device.

11. Tyre (11) according to claim 10, wherein the length and/or width of said protective layer are equal to or greater than the length and/or width of said monitoring device (3), respectively.

12. Tyre (11) according to claim 1, wherein said flexible support is made of an elastomeric or thermoplastic material selected from the group consisting of nylon, polyester, polyimide, and polyurethane.

13. Tyre (11) according to claim 12, wherein said elastomeric or thermoplastic material is resistant to the operating temperatures of the tyre (11) ranging from about -40°C to about 160°C.

14. A method for installing a monitoring device (3) made on a flexible support on a tyre (11) having an inner surface (111) of substantially toroidal shape, the method comprising:
• selecting a portion of the inner surface (111) of the tyre (11) wherein the monitoring device (3) is desired to be installed;
• achieving the adhesion between said flexible support and said portion of the internal surface of the tyre (11);
• wherein said adhesion is achieved through a decoupling element interposed between said flexible support and said portion of the internal surface of the tyre (11),
wherein said decoupling element is an acrylic double-sided adhesive tape, and
**characterised in that**
said acrylic double-sided adhesive tape is resistant to a dynamic shear stress higher than 50 kPa, measured according to ASTM D-1002.

15. Method according to claim 14, wherein said decoupling element has the characteristics defined according to any one of claims 2 to 9.

## Patentansprüche

1. Reifen (11), der eine Innenfläche (111) und mindestens eine Überwachungsvorrichtung (3) aufweist, die an der Innenfläche (111) haftet, wobei eine solche Überwachungsvorrichtung (3) auf einem flexiblen Träger hergestellt ist, wobei die Haftung des flexiblen Trägers an die Innenfläche (111) durch ein Entkopplungselement erreicht wird, das zwischen der mindestens einen Überwachungsvorrichtung (3) und der Innenfläche (111) des Reifens (11) eingefügt ist,
wobei das Entkopplungselement ein doppelseitiges Acrylklebeband ist, und
**dadurch gekennzeichnet, dass** das doppelseitige Acrylklebeband gegenüber einer dynamischen Scherspannung von mehr als 50 kPa, gemessen nach ASTM D-1002, beständig ist.

2. Reifen (11) nach Anspruch 1, wobei das doppelseitige Acrylklebeband eine Komponente umfasst, die aus der Gruppe ausgewählt ist, die aus (i) einem viskoelastischen Acrylschaum, (ii) einem Substrat aus expandiertem Polymermaterial, (iii) mindestens einer Acrylklebeschicht oder (iv) Kombinationen davon besteht, wobei die Komponente (i), (ii) und (iii) eine Dicke gleich oder größer als 0,4 mm aufweist.

3. Reifen (11) nach Anspruch 1, wobei das doppelseitige Acrylklebeband gegenüber den Betriebstemperaturen des Reifens (11) von etwa -40 °C bis etwa 160 °C beständig ist.

4. Reifen (11) nach Anspruch 1, wobei das doppelseitige Acrylklebeband gegenüber einer dynamischen Scherspannung von mehr als 150 kPa, beispielsweise im Bereich von 150 bis 3000 kPa, beständig ist.

5. Reifen (11) nach Anspruch 2, wobei das expandierte Polymermaterial aus der Gruppe ausgewählt ist, die aus expandiertem EPDM-Kautschuk, expandiertem Polyurethan und Kombinationen davon besteht.

6. Reifen (11) nach Anspruch 2, wobei das Substrat aus expandiertem Polymermaterial eine Acrylklebeschicht umfasst, die auf beide Oberflächen des Substrats beschichtet ist.

7. Reifen (11) nach Anspruch 2, wobei das expandierte Polymermaterial eine Dichte im Bereich von 10 bis 800 kg/m³, bevorzugt im Bereich von 20 bis 700 kg/m³ aufweist.

8. Reifen (11) nach einem der vorstehenden Ansprüche, wobei das Entkopplungselement eine Dicke, einschließlich der auf seinen Oberflächen abgelagerten Klebeschichten, im Bereich von 0,4 bis 2,4 mm, bevorzugt im Bereich von 0,6 bis 2,2 mm, bevorzugter im Bereich von 0,8 bis 2,0 mm aufweist.

9. Reifen (11) nach einem der vorstehenden Ansprüche, wobei die Länge und/oder Breite des Entkopplungselements jeweils gleich oder größer als die Länge und/oder Breite des flexiblen Trägers sind.

10. Reifen (11) nach einem der vorstehenden Ansprüche, wobei eine Schutzschicht auf der Überwachungsvorrichtung (3) angeordnet ist, um die Komponenten der Vorrichtung zu bedecken und zu schützen.

11. Reifen (11) nach Anspruch 10, wobei die Länge und/oder Breite der Schutzschicht jeweils gleich oder größer als die Länge und/oder Breite der Überwachungsvorrichtung (3) sind.

12. Reifen (11) nach Anspruch 1, wobei der flexible Träger aus einem elastomeren oder thermoplastischen Material hergestellt ist, das aus der Gruppe ausgewählt ist, die aus Nylon, Polyester, Polyimid und Polyurethan besteht.

13. Reifen (11) nach Anspruch 12, wobei das elastomere oder thermoplastische Material gegenüber den Betriebstemperaturen des Reifens (11) im Bereich von etwa - 40 °C bis etwa 160 °C beständig ist.

14. Verfahren zum Installieren einer Überwachungsvorrichtung (3), die auf einem flexiblen Träger an einem Reifen (11) hergestellt ist, der eine Innenfläche (111) mit im Wesentlichen toroidaler Form aufweist, wobei das Verfahren umfasst:
- Auswählen eines Abschnitts der Innenfläche (111) des Reifens (11), in dem die Überwachungsvorrichtung (3) installiert werden soll;
- Erreichen der Haftung zwischen dem flexiblen Träger und dem Abschnitt der Innenfläche des Reifens (11);
- wobei die Haftung durch ein Entkopplungselement erreicht wird, das zwischen dem flexiblen Träger und dem Abschnitt der Innenfläche des Reifens (11) eingefügt ist,
wobei das Entkopplungselement ein doppelseitiges Acrylklebeband ist, und
**dadurch gekennzeichnet, dass** das doppelseitige Acrylklebeband gegenüber einer dynamischen Scherspannung von mehr als 50 kPa, gemessen nach ASTM D-1002, beständig ist.

15. Verfahren nach Anspruch 14, wobei das Entkopplungselement die nach einem der Ansprüche 2 bis 9 definierten Eigenschaften aufweist.

## Revendications

1. Pneumatique (11) présentant une surface intérieure (111) et au moins un dispositif de surveillance (3) adhérant à ladite surface intérieure (111), dans lequel un tel dispositif de surveillance (3) est réalisé sur un support souple, l'adhérence dudit support souple à ladite surface intérieure (111) étant réalisée par un élément de découplage interposé entre ledit au moins un dispositif de surveillance (3) et ladite surface intérieure (111) du pneumatique (11),
dans lequel ledit élément de découplage est un ruban adhésif acrylique double face, et
**caractérisé en ce que** ledit ruban adhésif acrylique double face est résistant à une contrainte de cisaillement dynamique supérieure à 50 kPa, mesurée selon la norme ASTM D-1002.

2. Pneumatique (11) selon la revendication 1, dans lequel ledit ruban adhésif acrylique double face comprend un composant choisi dans le groupe consistant en (i) une mousse acrylique viscoélastique, (ii) un substrat de matériau polymère expansé, (iii) au moins une couche adhésive acrylique, ou (iv) des combinaisons de ceux-ci, dans lequel ledit composant (i), (ii) et (iii) présente une épaisseur égale ou supérieure à 0,4 mm.

3. Pneumatique (11) selon la revendication 1, dans lequel ledit ruban adhésif acrylique double face résiste aux températures de fonctionnement du pneumatique (11) d'environ -40 °C à environ 160 °C.

4. Pneumatique (11) selon la revendication 1, dans lequel ledit ruban adhésif acrylique double face est résistant à une contrainte de cisaillement dynamique supérieure à 150 kPa, par exemple allant de 150 à 3 000 kPa.

5. Pneumatique (11) selon la revendication 2, dans lequel ledit matériau polymère expansé est choisi dans le groupe consistant en le caoutchouc EPDM expansé, le polyuréthane expansé et leurs combinaisons.

6. Pneumatique (11) selon la revendication 2, dans lequel ledit substrat en matériau polymère expansé comprend une couche adhésive acrylique revêtue sur les deux surfaces dudit substrat.

7. Pneumatique (11) selon la revendication 2, dans lequel ledit matériau polymère expansé présente une masse volumique allant de 10 à 800 kg/m³, de préférence allant de 20 à 700 kg/m³.

8. Pneumatique (11) selon l'une quelconque des revendications précédentes, dans lequel ledit élément de découplage présente une épaisseur, incluant les couches adhésives déposées sur ses surfaces, allant de 0,4 à 2,4 mm, de préférence allant de 0,6 à 2,2 mm, plus préférentiellement allant de 0,8 à 2,0 mm.

9. Pneumatique (11) selon l'une quelconque des revendications précédentes, dans lequel la longueur et/ou la largeur dudit élément de découplage sont égales ou supérieures à la longueur et/ou à la largeur dudit support souple, respectivement.

10. Pneumatique (11) selon l'une quelconque des revendications précédentes, dans lequel une couche protectrice est disposée sur ledit dispositif de surveillance (3) pour recouvrir et protéger les composants dudit dispositif.

11. Pneumatique (11) selon la revendication 10, dans lequel la longueur et/ou la largeur de ladite couche protectrice sont égales ou supérieures à la longueur et/ou à la largeur dudit dispositif de surveillance (3), respectivement.

12. Pneumatique (11) selon la revendication 1, dans lequel ledit support souple est réalisé en un matériau élastomère ou thermoplastique choisi dans le groupe consistant en le nylon, le polyester, le polyimide et le polyuréthane.

13. Pneumatique (11) selon la revendication 12, dans lequel ledit matériau élastomère ou thermoplastique est résistant aux températures de fonctionnement du pneumatique (11) allant d'environ -40 °C à environ 160 °C.

14. Procédé d'installation d'un dispositif de surveillance (3) réalisé sur un support souple sur un pneumatique (11) présentant une surface intérieure (111) de forme sensiblement toroïdale, le procédé comprenant :
- la sélection d'une partie de la surface intérieure (111) du pneumatique (11) dans lequel on souhaite installer le dispositif de surveillance (3) ;
- la réalisation de l'adhérence entre ledit support souple et ladite partie de la surface intérieure du pneumatique (11) ;
- dans lequel ladite adhérence est obtenue grâce à un élément de découplage interposé entre ledit support souple et ladite partie de la surface intérieure du pneumatique (11),
dans lequel ledit élément de découplage est un ruban adhésif acrylique double face, et
**caractérisé en ce que** ledit ruban adhésif acrylique double face est résistant à une contrainte de cisaillement dynamique supérieure à 50 kPa, mesurée selon la norme ASTM D-1002.

15. Procédé selon la revendication 14, dans lequel ledit élément de découplage présente les caractéristiques définies selon l'une quelconque des revendications 2 à 9.
